# EUROPEAN PATENT APPLICATION

(11) **EP 1 134 977 A1**
(43) Date of publication of application: **19.09.2001**
(21) Application number: 00200793.8
(22) Date of filing: 06.03.2000
(51) Int. Cl.: H04N 7/167

(54) **Method and system for providing copies of scrambled content with unique watermarks, and system for descrambling scrambled content**

(71) Applicant: Irdeto Access B.V., 2132 HD Hoofddorp (NL)
(72) Inventor: Wajs, Andrew Augustine, 2023 AA Haarlem (NL)
(74) Representative: de Vries, Johannes Hendrik Fokke

(57) **Abstract**

A system for providing or playing back a copy of scrambled content with a unique watermark comprises a storage device containing a scrambled copy watermarked with first pre-determined bits, a scrambled copy watermarked with second pre-determined bits and a processing unit programmed to provide at a request received from a user a copy of the complete scrambled content by combining parts of the scrambled copy watermarked with first predetermined bits and parts the scrambled copy watermarked with second predetermined bits in a manner unique to the user. In a system for providing scrambled content in particular by broadcasting, the scrambler for scrambling a clear content to provide scrambled content uses a first key(K_{F}) to scramble the clear content. A processing device is programmed to provide clear content comprising a plurality of double parts, one part watermarked with first predetermined bits and one part watermarked with second predetermined bits, wherein the scrambler scrambles the parts watermarked with first predetermined bits with a second key(K_{Z}) and the parts watermarked with second predetermined bits with a third key(K_{O}). A key management program enforces receivers adapted to descramble the scrambled content with a combination of descrambled parts watermarked with first predetermined bits and parts watermarked with second predetermined bits unique to the respective receivers.

## Description

The invention generally relates to fingerprinting or watermarking of content and more specifically to a method and system for providing copies of scrambled content with unique watermarks. The invention further relates to a system for providing scrambled content in particular by broadcasting and to a system for descrambling scrambled content.

In order to prevent unauthorised copying of content, content is generally scrambled, wherein only authorised users having the correct key(s) for descrambling are able to use the content. Generally the content is both compressed and scrambled. However, after decompressing and descrambling unauthorised copies could be made. In order to locate the source of unauthorised copies, it is desirable to fingerprint or watermark content however without decompressing and descrambling the content. Fingerprinting normally involves processing the content by adding predetermined noise or the like to the content. When the content is scrambled, access to the content is not available, so normally the content should be descrambled before the fingerprint or watermark can be added. Additionally, it is desirable to add the fingerprint in a highly insecure environment. Under such circumstances it is undesirable to descramble and rescramble the content for the watermarking process as it is very likely that the environment is tampered with to bypass the watermarking process. Moreover, adding watermarks and rescrambling requires significant processing capacity.

The invention aims to provide a method and system for providing copies of scrambled content, wherein unique watermarks can be added in a relatively simple manner.

According to a first aspect of the invention a method for providing copies of scrambled content with unique watermarks is provided, characterized by providing at least two copies of at least parts of the content, one copy watermarked with first predetermined bits, and one copy watermarked with second predetermined bits, scrambling the copy watermarked with first predetermined bits, scrambling the copy watermarked with second predetermined bits and providing a user copy of the scrambled content by combining parts of the scrambled copy watermarked with first predetermined bits and parts the scrambled copy watermarked with second predetermined bits in a manner unique for the user copy.

According to a second aspect the invention provides a system for providing or playing back a copy of scrambled content with a unique watermark, comprising a processing unit and a storage device, characterized in that the storage device contains at least a scrambled copy of at least parts of the content watermarked with first predetermined bits, and a scrambled copy of at least parts of the content watermarked with second predetermined bits, and in that the processing unit is programmed to provide at a request received from a user a copy of the complete scrambled content by combining parts of the scrambled copy watermarked with first predetermined bits and parts the scrambled copy watermarked with second predetermined bits in a manner unique to the user.

In particular in broadcast applications the invention involves adding a watermark to scrambled content which is descrambled in real time in a receiver or descrambled during playback of content stored to disk. According to a third aspect the invention provides a system for providing scrambled content, in particular by broadcasting, comprising a scrambler for scrambling clear content to provide scrambled content, characterized by a processing device programmed to provide clear content comprising a plurality of parts in two or more copies, each copy watermarked with predetermined bits unique to the copy, wherein the scrambler scrambles at least the watermarked copies with a corresponding key(K_{Z}, K_{O}), and a key management program enforcing receivers adapted to descramble the scrambled content to provide clear content with a predetermined combination of descrambled watermarked copies at each receiver, the clear content thereby having a watermark unique to the respective receiver.

According to a further aspect of the invention a system is provided for descrambling scrambled content, comprising a descrambler for descrambling the scrambled content, and a processing device for providing keys to the descrambler, characterized in that the processing device is programmed to provide the second key(K_{Z}) or third key(K_{O}) such that the scrambled content is descrambled with a combination of descrambled parts watermarked with first predetermined bits and parts watermarked with second predetermined bits unique to the descrambling system.

The invention will be further explained by reference to the drawings in which two embodiments of the invention are schematically shown.

Fig. 1 schematically shows an application of the method and system of the invention in an Internet environment.

Fig. 2 schematically shows an application of the method and system of the invention in a broadcasting environment.

In the embodiments described hereinafter zero's will be used as first predetermined bits and one's will be used as second predetermined bits. It is however contemplated that predetermined bit sequences of multiple bits are used to watermark the copies used in the method and system of the present invention. Further only two copies watermarked with zero's and one's, respectively are used in the examples described. It will be understood that more than two copies, each watermarked with a predetermined bit sequence, can be used in the method and system of the invention.

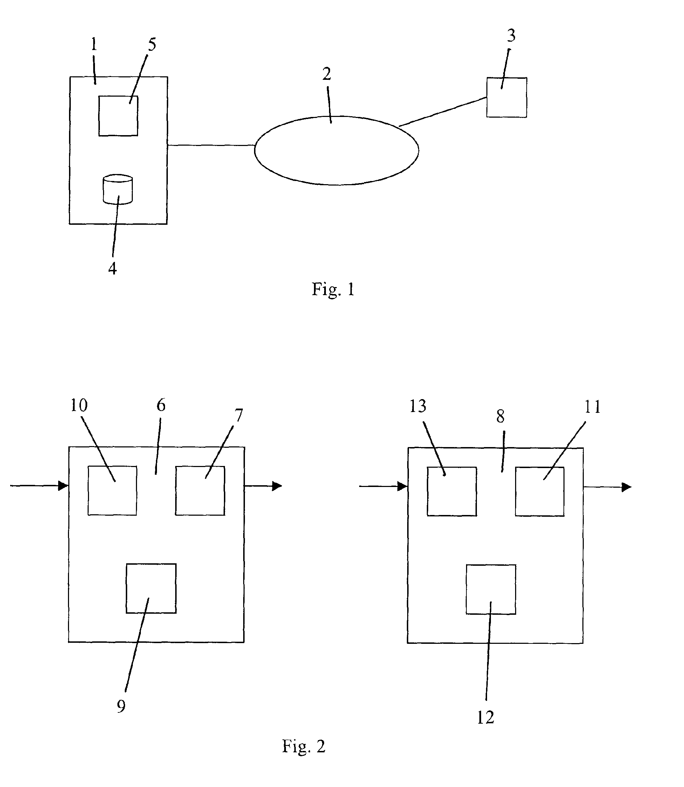

Referring to fig. 1 there is shown an embodiment of the invention in an Internet application, wherein a server 1 is connected in a known manner to the Internet 2 and a large number of clients 3 is also connected to the Internet. It is noted that the Internet is only mentioned as an example of a network capable of providing a connection between a server 1 and clients 2. Any other type of connection can be used.

The server 1 comprises a processing unit 4 and a storage device 5, such as a hard disc. The storage device 5 contains three copies of the content, which is for example a movie. Each copy stored in the storage device 5 is scrambled in a suitable manner. A first copy referred to as neutral copy in this specification is just scrambled. A second copy of the content is obtained by adding a watermark with one's only to at least parts of the complete content. Thereafter the second copy is scrambled in a suitable manner, so that a scrambled copy watermarked with one's is obtained. The third copy is obtained by watermarking at least parts of the content with zero's only and thereafter scrambling the copy watermarked with zero's in a suitable manner. It is noted that in practice the size of the watermarked copies may comprise for example only 1-20% of the complete movie. However it is possible to watermark the complete movie with one's and zero's, respectively. In that case it is not necessary to use a neutral scrambled copy. Further it is noted that the copies of the content need not to be stored on the same disc or at the same server.

If a user requests the download of a scrambled copy of the content from the server 1 by means of a client computer 2, a watermark unique to the user/client 3 is added as follows. This watermark is a unique identification made up of a unique sequence of one's and zero's. In accordance with this unique sequence of one's and zero's the processing unit 4 combines parts of the neutral copy, the copy watermarked with zero's and the copy watermarked with one's and forwards the combination from the server 1 to the client 3. In this manner the client 3 receives a scrambled copy with a unique watermark added to the same, wherein for adding the watermark it is not necessary to descramble and rescramble the content in the relatively insecure environment of the server. The unique identification of one's and zero's and a user identification are stored in the storage device 5 or any other suitable storage device.

The neutral scrambled copy of the content is used to reduce the amount of data that needs to be stored in the storage device 4. However, it is possible to apply the method for providing a scrambled copy with watermark without using a neutral scrambled copy. Further, it is noted that the server 1 can also be a consumer home apparatus for playing back stored content.

Fig. 2 shows an embodiment of the method of the invention as used in a broadcast application. A system 6 for broadcasting scrambled content comprises a scrambler 7 for scrambling clear content in a usual manner. For example keys are used by the scrambler 7 in a known scrambling algorithm, wherein the keys are inserted into the stream scrambled content as entitlement control messages (ECM's). In the broadcast application of fig. 2, the watermark is added to the content during decryption at a system 8 for descrambling the scrambled content received from the broadcasting system 6. Descrambling in the system 8 can be real time or during playback at a later time if the system 8 comprises a suitable storage medium, for example a hard disc.

The broadcasting system 6 comprises a processing device 9 receiving the content to be broadcasted, for example a movie. The processing device 9 is programmed to provide a plurality of double parts or so-called double illuminated parts. If the movie is for example compressed according the MPEG algorithm, I-frames or parts thereof to keep the bandwidth of the system down, are double illuminated and both double illuminated sections are provided with a watermark by adding a watermark of zero's only to the first section and a watermark of one's only to the second section of each double illuminated part. The processing device 9 forwards the neutral sections and the double illuminated sections to the scrambler 7 and controls the scrambler 7 to use a first key K_{F} to scramble to neutral sections, a second key K_{Z} to scramble the sections watermarked with zero's and a third key K₀ to scramble the sections watermarked with one's.

The broadcasting system 6 comprises a device 10 for providing a key management program enforcing descrambling systems 8 or more generally receivers adapted to descramble the scrambled content with a combination of descrambled sections watermarked with zero's and sections watermarked with one's unique to the respective receivers 8. In this manner each system 8 provides a clear content stream with an identification unique to the system.

The device 10 can for example provide ECM's with the first key K_{F} and the second key K_{Z} or the third key K₀. During broadcasting the scrambled content, the device 10 provides ECM's to the respective receiving systems 8 alternatingly containing the second K_{Z} or the third key K₀ to obtain the unique combinations of one's and zero's at the respective receiving systems 8.

The receiving system 8 for descrambling the scrambled content comprises a descrambler 11 for descrambling the scrambled content and a processing device 12 for providing keys obtained from the ECM's received to the descrambler 11. A processing unit 13 receives the scrambled content and extracts the ECM's from the content and forwards the ECM's to the processing device 12. In an embodiment wherein the device 10 of the broadcasting system 6 provides ECM's with the first key K_{F} and the second key K_{Z} or the third key K₀, the processing device 12 delivers the keys to the descrambler 11, so that a clear content with a unique combination of zero's and one's will be obtained. For, if the second key K_{Z} is available, only the section watermark with zero's can be descrambled whereas if only the K₀ is available only the section watermarked with one's can be descrambled. In this embodiment watermarking the clear content is controlled directly from the broadcasting system 6.

As an alternative, the key management program can be downloaded or permanently stored in the processing device 12, which is made as a secure device in this case, i.e. a device which can not be tampered with, such as a smart card. In such a case the smart card 12 could receive an ECM including all three keys K_{F}, K_{Z} and K₀, wherein the keys are provided to the descrambler 11 in a manner unique to the smart card 12.

As stated above it will be understood that instead of double parts and two keys K_{Z} and K₀ as in the embodiment of fig. 2, the processing device can be programmed to provide clear content with a plurality of parts in more than two copies using more than two keys for scrambling and descrambling, respectively, the copies.

Although a movie is mentioned as an example of content it will be understood that the invention can be used with any type of video or audio content. In embodiments where secrecy is not important a neutral copy in the clear can be used instead of a scrambled copy. In the system of fig. 2, the ECM's would comprise the keys K_{Z} and K_{O} only.

Further, it is noted that the system of fig. 2 can also be used in other applications for providing copies with unique watermarks by means of a key management program.

The invention is not restricted to the above described embodiments which can be varied in a number of ways within the scope of the attached claims.

## Claims

1. Method for providing copies of scrambled content with unique watermarks, **characterized by** providing at least two copies of at least parts of the content, one copy watermarked with first predetermined bits, and one copy watermarked with second predetermined bits, scrambling the copy watermarked with first predetermined bits, scrambling the copy watermarked with second predetermined bits and providing a user copy of the scrambled content by combining parts of the scrambled copy watermarked with first predetermined bits and parts the scrambled copy watermarked with second predetermined bits in a manner unique for the user copy.

2. Method according to claim 1, wherein a neutral copy of the content is provided and a user copy of the scrambled content is provided by combining parts of the neutral copy, parts of the scrambled copy watermarked with first predetermined bits and parts the scrambled copy watermarked with second predetermined bits in a manner unique for the user copy.

3. System for providing or playing back a copy of scrambled content with a unique watermark, comprising a processing unit and a storage device, **characterized in that** the storage device contains at least a scrambled copy of at least parts of the content watermarked with first predetermined bits, and a scrambled copy of at least parts of the content watermarked with second predetermined bits, and in that the processing unit is programmed to provide at a request received from a user a copy of the complete scrambled content by combining parts of the scrambled copy watermarked with first predetermined bits and parts the scrambled copy watermarked with second predetermined bits in a manner unique to the user.

4. System according to claim 3, wherein the processing unit is further programmed to store a user identification together with the corresponding unique combination of watermarked copies.

5. System according to claim 3 or 4, wherein the storage device further contains a neutral copy of the content, wherein the processing unit is programmed to provide a user copy of the complete content by combining parts of the neutral copy, parts of the scrambled copy watermarked with first predetermined bits and parts the scrambled copy watermarked with second predetermined bits in a manner unique to the user.

6. System for providing scrambled content, in particular by broadcasting, comprising a scrambler for scrambling clear content to provide scrambled content, **characterized by** a processing device programmed to provide clear content comprising a plurality of parts in two or more copies, each copy watermarked with predetermined bits unique to the copy, wherein the scrambler scrambles at least the watermarked copies with a corresponding key(K_{Z}, K_{O}), and a key management program enforcing receivers adapted to descramble the scrambled content to provide clear content with a predetermined combination of descrambled watermarked copies at each receiver, the clear content thereby having a watermark unique to the respective receiver.

7. System according to claim 6, wherein the scrambler uses a first key(K_{F}) to scramble the clear content, wherein the processing device is programmed to provide clear content comprising a plurality of double parts, one part watermarked with first predetermined bits and one part watermarked with second predetermined bits, wherein the scrambler scrambles the parts watermarked with first predetermined bits with a second key(K_{Z}) and the parts watermarked with second predetermined bits with a third key(K_{O}).

8. System according to claim 6, comprising a device for providing entitlement control messages for receivers with at least two keys (K_{Z},K_{O}), wherein the keys are alternated to obtain said unique watermarks at the respective receivers.

9. System according to claim 7, comprising a device for providing entitlement control messages for receivers with the first key(K_{F}), second key(K_{Z}) or third key(K_{O}), wherein the second key(K_{Z}) and third key(K_{O}) are alternated to obtain said unique combinations of second predetermined bits and first predetermined bits at the respective receivers, wherein the first key can be the same as the second or third key(K_{Z},K_{O}).

10. System for descrambling scrambled content, comprising a descrambler for descrambling the scrambled content, and a processing device for providing keys to the descrambler, **characterized in that** the processing device is programmed to provide at least a second key(K_{Z}) or third key(K_{O}) such that the scrambled content is descrambled with a combination of descrambled parts watermarked with first predetermined bits and parts watermarked with second predetermined bits unique to the descrambling system.
